# EUROPÄISCHE PATENTSCHRIFT

(11) **EP 2 176 577 B1**
(45) Veröffentlichungstag und Bekanntmachung des Hinweises auf die Patenterteilung: **26.09.2012**
(21) Anmeldenummer: 08785236.4
(22) Anmeldetag: 31.07.2008
(51) Int. Cl.: F16K 47/02

(54) **VORRICHTUNG ZUM SPERREN DES DURCHFLUSSES VON FLUIDEN MEDIEN IN ROHRLEITUNGEN, SCHLÄUCHEN ODER DERGLEICHEN, INSBESONDERE RÜCKSCHLAGVENTIL**
DEVICE FOR LOCKING THE THROUGH FLOW OF FLUID MEDIA IN PIPELINES, TUBES, OR THE LIKE, PARTICULARLY A CHECK VALVE
DISPOSITIF POUR EMPECHER L'ECOULEMENT DE MILIEUX FLUIDES DANS DES CONDUITES, DES FLEXIBLES OU ANALOGUES, EN PARTICULIER A TRAVERS CLAPET ANTIRETOUR

(30) Priorität: 17.08.2007 DE 102007039025
(43) Veröffentlichungstag der Anmeldung: 21.04.2010
(73) Patentinhaber: RITAG Ritterhuder Armaturen GmbH & Co. Armaturenwerk KG, 27711 Osterholz-Scharmbeck (DE)
(72) Erfinder: GELLWEILER, Thomas, 27711 Osterholz-Scharmbeck (DE); SCHRADER, Herfried, 28209 Bremen (DE); HEDEMANN, Jürgen, 27711 Osterholz-Schambeck (DE)
(74) Vertreter: Ellberg, Nils
(86) Internationale Anmeldenummer: PCT/EP2008/006292
(87) Internationale Veröffentlichungsnummer: WO 2009/024250

(56) Entgegenhaltungen:
- EP-A- 1 251 279
- DE-B- 1 228 111
- US-A- 3 315 696
- US-A- 4 019 713

## Beschreibung

Die Erfindung betrifft eine Vorrichtung zum Sperren des Durchflusses von fluiden Medien in Rohrleitungen, Schläuchen oder dergleichen, insbesondere ein Rückschlagventil, mit einem Gehäuse, das einen Durchflusskanal für das Medium aufweist, wobei der durchströmte Querschnitt des Durchflusskanals durch ein Absperrmittel, insbesondere ein Ventilteller oder dergleichen, verschließbar ist, gemäß dem Oberbegriff des Anspruchs 1.

Vorrichtungen dieser Art sind aus der Praxis in verschiedenen Ausführungsformen bekannt, beispielsweise als Rückschlagventile. Zum Verschließen und/oder Begrenzen des Durchflusses des Mediums in der Rohrleitung dient in diesem Fall in der Regel ein Ventilteller, der durch eine Feder gegen einen Ventilsitz gedrückt wird. Ab einem bestimmten Druck in der Rohrleitung vor dem Ventil wird der Ventilteller durch das Medium gegen die Feder gedrückt und geöffnet. Fällt der Druck in der Rohrleitung unter einen bestimmten Grenzwert, wird der Ventilteller durch die Feder wieder gegen den Sitz gedrückt und die Rohrleitung abgesperrt. Auch diese Weise kann ein ungewollter Rückfluss des Mediums verhindert werden.

Vorrichtungen der in Rede stehenden Art sind beispielsweise aus der DE 10 2004 006 632 A1 und DE 10 2006 059 318 A1 der Anmelderin bekannt. Die dort beschriebenen Rückschlagventile sind hinsichtlich des grundsätzlichen Aufbaus vergleichbar, befassen sich aber im Übrigen mit einer sehr speziellen Aufgabe, nämlich der Vermeidung von Rückständen im Bereich des Ventils. Diese Aufgabe spielt im vorliegenden Fall keine Rolle.

In der Praxis kommt es immer wieder zu einem plötzlichen, schnellen Schließen des Ventils in Verbindung mit hoher Lärmentwicklung durch das Aufschlagen des Ventiltellers auf den Ventilsitz. Durch die Dämpfungseinrichtung kann dieses Phänomen zumindest kompensiert, vorzugsweise aber vermieden werden. Die Ursache für das blitzartige Schließen des Ventils kann auch ein sogenannter Wasserschlag in der Rohrleitung sein. Als Wasserschlag bezeichnet man einen Druckstoß in der medienführenden Rohrleitung, der z.B. durch das plötzliche Schließen eines anderen Ventils hervorgerufen werden kann. Ein solcher Wasserschlag kann zu einer Beschädigung der Rohrleitung und/oder des Ventils führen, ist jedoch mindestens wegen der damit einhergehenden Lärmentwicklung unangenehm. Ein gedämpftes Rückschlagventil ist beispielswiese aus den Entgegenhaltungen EP 1 251 279 A2 und DE 1 228111 A1 bekannt

Ausgehend von den aus dem Stand der Technik bekannten Vorrichtungen liegt der Erfindung die Aufgabe zugrunde, derartige Vorrichtungen weiterzuentwickeln.

Eine Vorrichtung zur Lösung dieser Aufgabe weist die Merkmale des Anspruchs 1 auf.

Weiterbildungen der Erfindung und vorteilhafte Ausgestaltungen derselben ergeben sich auch den Unteransprüchen sowie der Beschreibung im Übrigen und der Zeichnung.

In einer bevorzugten Ausführungsform ist vorgesehen, dass der Kolben wenigstens eine Durchströmöffnung aufweist, durch die das in den Raum zwischen Zylinder und Kolben einströmende Medium entweichen kann, wobei das im Raum befindliche Medium zu Dämpfung des Schließens des Ventiltellers dient. Im Prinzip ist vorgesehen, dass das im Raum zwischen Kolben und Zylinder befindliche Medium nur langsam aus diesem Bereich entweichen kann, was jedoch als Voraussetzung für das vollständige Schließen des Ventils erforderlich ist. Soweit es sich bei dem Medium um eine Flüssigkeit handelt, findet dabei allenfalls eine geringe Komprimierung des Mediums statt, so dass ein Dämpfungseffekt entsteht Bei stark komprimierbaren Medien wie Gasen ist eine entsprechende Anpassung des Größenverhältniss zwischen Einströmöffnungen und Durchströmöffnungen erforderlich, um einen Dämpfungseffekt zu erzielen.

Im Prinzip kann die Drosselung des aus dem Raum entweichenden Mediums über die Durchflusskanäle erfolgen. Vorzugsweise ist jedoch vorgesehen, dass im Ventilteller wenigstens ein Kanal ausgebildet ist zur Rückführung des durch die jeweilige Durchströmöffnung austretenden Mediums beim Schließen des Ventiltellers in den Bereich vor dem Ventilteller, wobei der Querschnitt des oder jedes Kanals durch jeweils eine Drosseleinrichtung einstellbar ist zur Verstellung der Dämpfungseinrichtung. Es kommen somit spezielle "Drosselkanäle" zum Einsatz, die an die jeweilligen Druckverhältnisse in der Rohrleitung anpassbar sind.

Weitere Einzelheiten ergeben sich aus den Unteransprüchen im Übrigen.

Weitere Einzelheiten ergeben sich aus den Unteransprüchen im Übrigen.

Ein bevorzugtes Ausführungsbeispiel der Erfindung wird nachfolgend anhand der Zeichnung beschrieben. In dieser zeigt:
- Fig. 1: ein Rückschlagventil im Querschnitt mit geschlossenem Ventilteller,
- Fig. 2 und Fig. 3: räumliche Darstellungen des Ventils gemäß Fig. 1 in teilweise geschnittener Darstellung,
- Fig. 4: das Ventil gemäß Fig. 1 in geöffneter Stellung,
- Fig. 5 und Fig. 6: das Ventil gemäß Fig. 4 in Darstellungen analog zu Fig. 2 und 3.

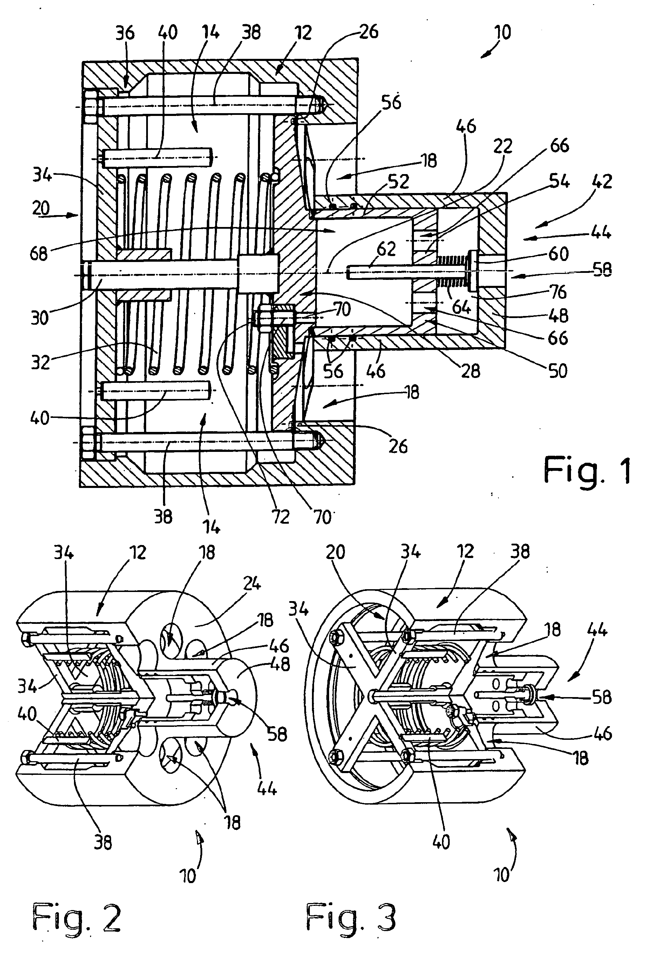

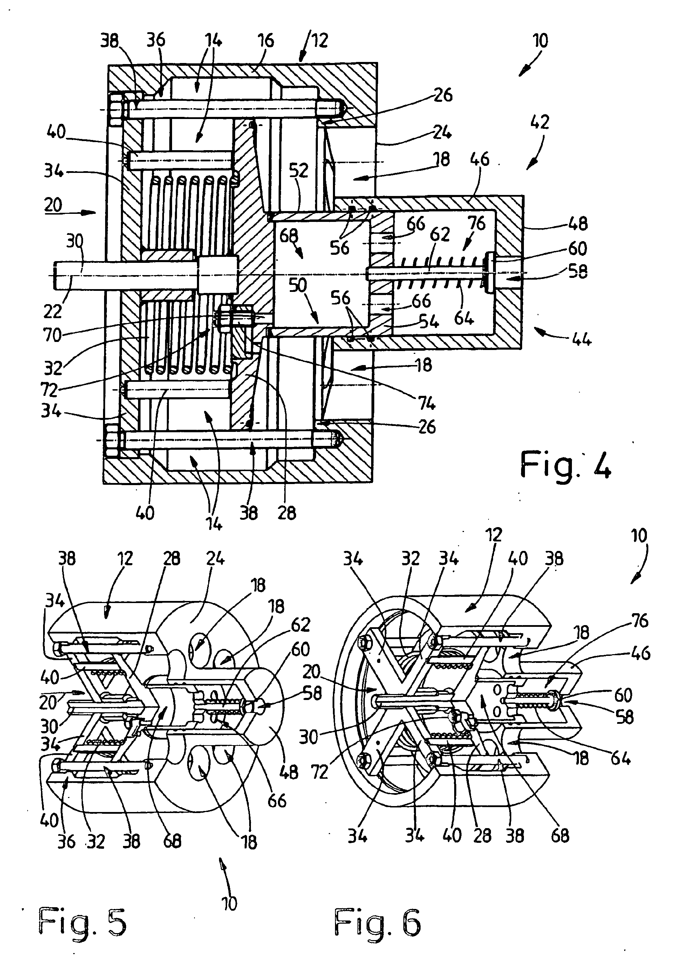

Die Figuren zeigen ein Rückschlagventil 10, das als Zwischenflansch-Rückschlagventil ausgebildet sein kann, z. B. zum Einbau in eine nicht gezeigte Rohrleitung. Der Verlauf der Rohrleitung wird vorzugsweise etwa horizontal sein, d.h., auch das Rückschlagventil 10 ist entsprechend ausgerichtet, beispielsweise in der in Fig. 1 und 4 gezeigten Lage. Gleichwohl ist das Rückschlagventil 10 auch zum Einbau in im wesentliche vertikale Rohrleitungen geeignet. Das Rückschlagventil 10 kann zudem auch in andere medienführende Leitungen eingebaut werden, beispielsweise Schläuche, Kanäle, etc. Im Hinblick auf die zu transportierenden Medien kommen sowohl gasförmige als auch bevorzugt flüssige Medien in Betracht.

Das Rückschlagventil 10 verfügt über ein im wesentlichen rotationssymmetrisches Gehäuse 12 in dem ein Durchflusskanal 14 ausgebildet ist, der seitlich durch Wandungen 16 des Gehäuses 12 begrenzt wird. Der Durchflusskanal 14 durchsetzt das Gehäuse 12 von einer Einlassöffnung 18 zu einer Auslassöffnung 20. In dieser Richtung fließt bzw. strömt auch das Medium durch das geöffnete Rückschlagventil 10. Als Besonderheit besteht die Einlassöffnung 18 aus mehreren Bohrungen, die im Gehäuse 12 konzentrisch zu einer Symmetrieachse 22 des Gehäuses 12 in einer Stirnwand 24 des Gehäuses 12 angeordnet sind.

Im Gehäuse 12 ist umlaufend ein Ventilsitz 26 ausgebildet, der durch ein Absperrmittel, nämlich einen Ventilteller 28, abdichtend verschließbar ist. Der Ventilteller 28 ist quer zur Symmetrieachse 22 gerichtet und in dieser Stellung in Längsrichtung der Symmetrieachse 22 hin- und herbewegbar. In üblicher Weise wird der Ventilteller 28 durch einen Ventilschaft 30 gehalten und mittels einer Ventilfeder 32 entgegen der Durchflussrichtung des Mediums gegen den Ventilsitz 26 gedrückt. Die Ventilfeder 32 stützt sich an Haltestegen 34 ab, die im Bereich der Auslassöffnung 20 angeordnet sind und die eine zentrale Bohrung als Führung für den Ventilschaft 30 aufweisen. Die Haltestege 34 sind in Art eines Kreuzes angeordnet und liegen randseitig auf einer innenseitig an den Wandungen 16 angeformten Konsole 36 auf. Zudem sind die Haltestege 34 über Verbindungsmittel 38 mit der gegenüberliegenden Stirnwand 24 lösbar verbunden, beispielsweise verschraubt. Weiterhin sind in den Haltestegen 34 Anschlagmittel 40 angeordnet, die den Hub des Ventiltellers 28 begrenzen.

Die Funktionsweise des Rückschlagventils 10 ist soweit wie im Stand der Technik üblich: Das in der Rohrleitung befindliche Medium strömt in der Durchflussrichtung gegen das Rückschlagventil 10. Ist der Druck in der Rohrleitung hoch genug, so wird der Ventilteller 28 gegen die Kraft der Ventilfeder 32 in Richtung der Auslassöffnung 20 gedrückt, so dass das Medium am Ventilteller 28 vorbei in den Durchflusskanal 14 strömen kann und das Rückschlagventil 10 im Bereich der Auslassöffnung 20 verlässt. Der Ventilteller 28 wird dabei durch den Ventilschaft 30 geführt. Der maximale Hub des Ventiltellers 28 ergibt sich durch die Anschlagmittel 40. Diese geöffnete Stellung ist in Fig. 4 gezeigt. Sinkt der Druck des Mediums in der Rohrleitung, so wird der Ventilteller 28 durch die Kraft der Ventilfeder 32 gegen den Ventilsitz 26 gedrückt, so dass ein Rückfluss des Mediums in den Bereich vor das Rückschlagventil 10 ausgeschlossen ist. Diese geschlossene Stellung ist in Fig. 1 gezeigt.

Eine Besonderheit des gezeigten Rückschlagventils 10 besteht darin, dass dem Ventilteller 28 als Absperrmittel für den Durchflusskanal 14 eine Dämpfungseinrichtung 42 zum kontrollierten Schließen des Ventiltellers 28 zugeordnet ist. Die Dämpfungseinrichtung 42 dient dazu, ein plötzliches schlagartiges Schließen des Ventiltellers 28 mit einem entsprechenden Aufprall am Ventilsitz 26 zu vermeiden. Der Einsatz der Dämpfungseinrichtung 42 führt dazu, dass der Ventilteller 28 selbst bei einem plötzlichen Druckabfall oder einer anderen Einwirkung nicht schlagartig geschlossen wird, sondern dass dieser Vorgang verlangsamt wird, so dass ein unkontrolliertes Aufschlagen des Ventiltellers 28 auf den Ventilsitz 26 unterbleibt.

Im vorliegenden Fall ist die Dämpfungseinrichtung 42 zum einen dadurch verwirklicht, dass im Bereich der Stirnwand 24 des Gehäuses 12 ein Zylinder 44 ausgebildet ist, der mediendicht mit dem Gehäuse 12 verbunden ist. Der Zylinder 44 verfügt über eine Zylinder-Mantelwand 46, die sich an das Gehäuse 12 anschließt und die einen ringförmigen Querschnitt aufweist. Verschlossen wird der Zylinder 44 auf der entgegen der Durchflussrichtung des Mediums gerichteten Seite durch eine entsprechende kreisförmige Zylinder-Stirnwand 48.

Im Inneren des Zylinders 44 ist ein Kolben 50 angeordnet, der in Richtung der Symmetrieachse 22 hin- und herbewegbar ist. Der Außendurchmesser des Kolbens 50 entspricht dem Innendurchmesser der Zylinder-Mantelwand 46. Die Gestalt des Kolbens 50 entspricht der Gestalt des Zylinders 44, nämlich mit einer Kolben-Mantelwand 52 und einer Kolben-Stirnwand 54. Im Bezug auf die Symmetrieachse 22 sind Gehäuse 12, Zylinder 44 und Kolben 50 konzentrisch angeordnet. Der Kolben 50 ist wie der Zylinder 44 innen hohl und schließt mediendicht an den Ventilteller 28 an. Zur Abdichtung des Systems sind Dichtungen 56 zwischen der Innenseite der Zylinder-Mantelwand 46 und der Außenseite der Kolben-Mantelwand 52 vorgesehen, beispielsweise in Form eines O-Rings.

In der Zylinder-Stirnwand 48 ist eine zentrale Einströmöffnung 58 vorgesehen, durch die das in der Rohrleitung befindliche Medium in den Raum 76 zwischen Kolben 50 und Zylinder 44 eindringen kann. Die Einströmöffnung 58 wird von einem Ventil 60 innenseitig verschlossen. Das Ventil 60 wird über einen Ventilschaft 62, der sich durch eine zentrische Bohrung in der Kolben-Stirnwand 54 erstreckt, geführt. Zudem wird das Ventil 60 durch eine Ventilfeder 64, die sich an der Außenseite der Kolben-Stimwand 54 abstößt, gegen die Innenseite der Zylinder-Stirnwand 48 gedrückt, zum Verschließen der Einströmöffnung 58.

Neben der zentralen Bohrung in der Kolben-Stimwand 54 weist diese Wand auch noch mehrere Durchströmöffnungen 66 auf, die konzentrisch um die Bohrung für den Ventilschaft 62 herum angeordnet sind. Durch die Durchströmöffnungen 66 kann das im Raum 76 zwischen Kolben 50 und Zylinder 44 befindliche Medium in das Innere des Kolbens 50 einströmen. Dieser Raum 68 im Inneren des Kolbens 50 wird begrenzt durch Kolben-Mantelwand 52, Kolben-Stimwand 54 und den Ventilteller 28. In Raum 68 kann das Medium über die Durchströmöffnungen 66 zuströmen. Durch vorzugsweise einen oder mehrere Kanäle 70 kann das Medium aus dem Raum 68 im Inneren des Kolbens 50 wieder herausgelangen. Die Kanäle sind im vorliegenden Fall im Ventilteller 28 ausgebildet, derart, dass das aus dem Raum 68 austretende Medium wieder in den Bereich der Einlassöffnungen 18 vor dem Ventilteller 28 zurückgeführt wird. Hierzu ist der Kanal 70 mehrfach abgewinkelt ausgebildet. Zudem ist eine Drosseleinrichtung 72 vorgesehen, mit der der Querschnitt des Kanals 70 und damit die Menge des Durchflusses durch diesen Kanal 70 regelbar ist. Im vorliegenden Fall ist die Drosseleinrichtung 72 durch einen Gewindestift 74 gebildet, der in eine entsprechende Gewindebohrung im Ventilteller 28 im Bereich des Kanals 70 hineingedreht werden kann. Je nach Eindrehtiefe des Gewindestifts 74 lässt sich der Durchfluss im Kanal 70 erhöhen oder verringern.

Die soweit beschriebene Vorrichtung funktioniert wie folgt:
Beim Öffnen des Ventiltellers 28 wird durch die Kopplung des Ventiltellers 28 mit dem Kolben 50 dieser in gleicher Weise bewegt, so dass sich der Raum 76 zwischen Zylinder 44 und Kolben 50 vergrößert. Gleichzeitig wird durch den in der Rohrleitung herrschenden Druck das Ventil 60 gegen den Druck der Ventilfeder 64 geöffnet, wodurch die Einströmöffnung 58 freigegeben wird. Damit kann das Medium nicht nur am Ventilteller 28 vorbei durch das Ventil hindurchströmen, sondern auch in den Raum 76 zwischen Kolben 50 und Zylinder 44. Sobald sich der Druck in der Rohrleitung durch das Öffnen des Ventiltellers 28 wieder verringert, wird das Ventil 60 durch die Ventilfeder 64 wieder zum Verschließen der Einströmöffnung 58 gegen die Innenseite der Zylinder-Stirnwand 48 gedrückt. Beim Schließen des Ventiltellers 28, also dem Vorgang, bei dem sich der Ventilteller 28 durch den Druck der Ventilfeder 32 gegen den Ventilsitz 26 bewegt, wird der mit dem Ventilteller gekoppelte Kolben 50 mitbewegt, so dass sich zwangsläufig der Raum 76 zwischen Zylinder 44 und Kolben 50 verkleinert. Dabei wird das in diesem Raum 76 befindliche Medium durch die Durchströmöffnungen 66 in den Raum 68 im Inneren des Kolbens 50 bewegt. Von dort gelangt es über den Kanal 70 in den Bereich der Einlassöffnungen 18 vor den Ventilteller 28. Die Größe bzw. der Durchmesser des Kanals 70 ist nun so gewählt, dass das in der Dämpfungseinrichtung 42 befindliche Medium nur langsam herausgedrückt bzw. herausbewegt werden kann. Dies führt zu einem verlangsamten Schließen des Ventiltellers 28 und damit zu einer Dämpfung dieses Schließvorgangs.

Durch Betätigung der Drosseleinrichtung 72 kann die Dämpfungseinrichtung 42 an den jeweiligen Einsatzzweck angepasst werden, also beispielsweise an die Beschaffenheit des Mediums bzw. an die in der Rohrleitung üblicherweise herrschenden Drücke.

Fig. 1 zeigt ein Rückschlagventil 10 mit geschlossenem Ventilteller 28 wohingegen Fig. 4 das Rückschlagventil 10 mit geöffnetem Ventilteller 28 zeigt. In beiden Zeichnungen ist das Ventil 60 jeweils in geschlossener Stellung gezeigt. Die Bewegung des Ventils 60 erfolgt aber im Prinzip in gleicher Weise wie die des Ventiltellers 28.

Im vorliegenden Fall ist nur ein einziger Kanal 70 vorgesehen. Es ist aber auch denkbar, dass mehrere Kanäle 70 vorgesehen sind, die jeweils eine Drosseleinrichtung 72 aufweisen oder die mittels einer gemeinsamen Drosseleinrichtung 72 einstellbar sind.

Der Gewindestift ist zudem derart angeordnet, dass er auf einfache Weise erreichbar ist, nämlich über die Auslassöffnung 20 bzw. den Durchflusskanal 14.

### Bezugszeichenliste

- 10: Rückschlagventil
- 11:
- 12: Gehäuse
- 13:
- 14: Durchflusskanal
- 15:
- 16: Wandung
- 17:
- 18: Einlassöffnung
- 19:
- 20: Auslassöffnung
- 21:
- 22: Symmetrieachse
- 23:
- 24: Stirnwand
- 25:
- 26: Ventilsitz
- 27:
- 28: Ventilteller
- 29:
- 30: Ventilschaft
- 31:
- 32: Ventilfeder
- 33:
- 34: Haltesteg
- 35:
- 36: Konsole
- 37:
- 38: Verbindungsmittel
- 39:
- 40: Anschlagmittel
- 41:
- 42: Dämpfungseinrichtung
- 43:
- 44: Zylinder
- 45:
- 46: Zylinder-Mantelwand
- 47:
- 48: Zylinder-Stirnwand
- 49:
- 50: Kolben
- 51:
- 52: Kolben-Mantelwand
- 53:
- 54: Kolben-Stirnwand
- 55:
- 56: Dichtung
- 57:
- 58: Einströmöffnung
- 59:
- 60: Ventil
- 61:
- 62: Ventilschaft
- 63:
- 64: Ventilfeder
- 65:
- 66: Durchströmöffnung
- 67:
- 68: Raum
- 69:
- 70: Kanal
- 71:
- 72: Drosseleinrichtung
- 73:
- 74: Gewindestift
- 75:
- 76: Raum

## Patentansprüche

1. Vorrichtung zum Sperren des Durchflusses von fluiden Medien in Rohrleitungen, Schläuchen oder dergleichen, insbesondere Rückschlagventil (10), mit einem Gehäuse (12) das einen Durchflusskanal (14) für das Medium aufweist, wobei
- der durchströmte Querschnitt des Durchflusskanals (14) durch einen Ventilteller (28) als Absperrmittel verschließbar ist,
- der Ventilteller (28) von einer Ventilfeder (32) entgegen der Durchflussrichtung des Mediums gegen einen Ventilsitz (26) gepresst wird, wobei
- dem Ventilteller (28) eine Dämpfungseinrichtung (42) zum kontrollierten Schließen des Ventiltellers (28) zugeordnet ist,
- die Dämpfungseinrichtung (42) entgegen der Federkraft der Ventilfeder (32) wirkt und den Ventilteller (28) beim Verschließen des Durchflusskanals (14) dämpft,
- die Dämpfungseinrichtung (42) einen in einem Zylinder (44) geführten Kolben (50) aufweist, dessen Bewegung durch das im Durchflusskanal (14) befindliche Medium beim Schließen des Durchflusskanals (14) mittels des Ventiltellers (28) dämpfbar ist,
- die Bewegung des Ventiltellers (28) mit der Bewegung des Kolbens (50) gekoppelt ist, wodurch der Kolben (50) synchron mit dem Ventilteller (28) beim Öffnen und Schließen desselben im feststehend im Gehäuse (12) angeordneten Zylinder (44) hin- und herbewegbar ist,
- der Zylinder (44) wenigstens eine Einströmöffnung (58) aufweist, durch die das Medium in einen Raum (76) zwischen Zylinder (44) und Kolben (50) einströmen kann, zur Dämpfung der Bewegung des Kolbens (50) und des Ventiltellers (28) beim Schließen,
**gekennzeichnet durch** folgende Merkmale:
- die oder jede Einströmöffnung (58) ist **durch** ein oder mehrere Ventile (60) verschließbar, derart, dass beim Schließen des Ventiltellers (28) kein Medium durch die oder jede Einströmöffnung (58) aus dem Raum (76) zwischen Zylinder (44) und Kolben (50) entweichen kann,
- das oder jedes Ventil (60) ist **durch** eine Ventilfeder (64) zum Verschließen der oder der jeweiligen Einströmöffnung (58) belastet und wird **durch** das einströmende Medium geöffnet, wobei das oder jedes Ventil (60) in einer Durchgangsbohrung im Kolben (50) gelagert ist,
- der Kolben (50) weist wenigstens eine Durchströmöffnung (66) auf, **durch** die das in den Raum (76) zwischen Zylinder (44) und Kolben (50) eingeströmte Medium vorzugsweise derart langsam entweichen kann, dass das im Raum (76) befindliche Medium eine Dämpfung des Schließens des Ventiltellers (28) bewirkt.

2. Vorrichtung nach einem der vorhergehenden Ansprüche, **dadurch gekennzeichnet, dass** im Ventilteller (28) wenigstens ein Kanal (70) ausgebildet ist zur Rückführung des durch die jeweilige Durchströmöffnung (66) austretenden Mediums beim Schließen des Ventiltellers (28) in den Bereich des Durchflusskanals (14) vor dem Ventilteller (28), wobei ein Querschnitt des oder jedes Kanals (70) durch jeweils eine Drosseleinrichtung (72) einstellbar Ist, zur Verstellung der Dämpfungseinrichtung (42).

3. Vorrichtung nach einem der vorhergehenden Ansprüche, **dadurch gekennzeichnet, dass** der Zylinder (44) eine im Querschnitt ringförmige Zylinder-Mantelwand (46) aufweist, die auf der entgegen der Durchflussrichtung des Mediums gerichteten Seite von einer kreisförmigen Zylinder-Stirnwand (48) verschlossen ist.

4. Vorrichtung nach einem der vorhergehenden Ansprüche, **dadurch gekennzeichnet, dass** eine einzige Einströmöffnung (58) zentral in der Zylinder-Stirnwand (48) angeordnet ist.

5. Vorrichtung nach einem der vorhergehenden Ansprüche, **dadurch gekennzeichnet, dass** der Kolben (50) eine im Querschnitt ringförmige Kolben-Mantelwand (52) aufweist, die auf der entgegen der Durchflussrichtung des Mediums gerichteten Seite von einer kreisförmigen Kolben-Stimwand (54) verschlossen ist.

6. Vorrichtung nach einem der vorhergehenden Ansprüche, **dadurch gekennzeichnet, dass** mehrere Durchströmöffnungen (66) konzentrisch in der Kolben-Stimwand (54) angeordnet sind.

7. Vorrichtung nach einem der vorhergehenden Ansprüche, **dadurch gekennzeichnet, dass** die Kolben-Mantelwand (S2) mediendicht am Ventilteller (28) anliegt.

8. Vorrichtung nach einem der vorhergehenden Ansprüche, **dadurch gekennzeichnet, dass** der Querschnitt wenigstens eines im Ventilteller (28) ausgebildeten Kanals (70) mittels einer Drosseleinrichtung (72) veränderbar ist, wobei die Drosseleinrichtung (72) vorzugsweise auf der von der Dämpfungseinrichtung (42) abgewandten Seite des Ventiltellers (28) verstellbar ist.

9. Vorrichtung nach einem der vorhergehenden Ansprüche, **dadurch gekennzeichnet, dass** die Drosseleinrichtung (28) mittig zum Durchflusskanal (14) positioniert ist.

## Claims

1. Device for shutting off the flow of fluid media in pipelines, hoses or the like, in particular a non-return valve (10), comprising a housing (12), which has a flow channel (14) for the medium, wherein
- the flowed-through cross section of the flow channel (14) can be shut off by a valve disc (28) as the shutting-off means,
- the valve disc (28) is pressed by a valve spring (32) against a valve seat (26) counter to the direction of flow of the medium, wherein
- the valve disc (28) is assigned a damping device (42) for the controlled closing of the valve disc (28),
- the damping device (42) acts counter to the spring force of the valve spring (32) and damps the valve disc (28) during the closing of the flow channel (14),
- the damping device (42) has a piston (50), which is guided in a cylinder (44) and the movement of which can be damped by the medium located in the flow channel (14) during the closing of the flow channel (14) by means of the valve disc (28),
- the movement of the valve disc (28) is coupled with the movement of the piston (50), whereby the piston (50) can be moved back and forth in the cylinder (44) arranged fixedly in the housing (12) synchronously with the valve disc (28) during the opening and closing of the same,
- the cylinder (44) has at least one inflow opening (58), through which the medium can flow into a space (76) between the cylinder (44) and the piston (50), for damping the movement of the piston (50) and of the valve disc (28) during the closing,
**characterized by** the following features:
- the or each inflow opening (58) can be closed by one or more valves (60) in such a way that, during the closing of the valve disc (28), no medium can escape from the space (76) between the cylinder (44) and the piston (50) through the or each inflow opening (58),
- the or each valve (60) is loaded by a valve spring (64) for closing the or the respective inflow opening (58) and is opened by the inflowing medium, wherein the or each valve (60) is mounted in a through-bore in the piston (50),
- the piston (50) has at least one through-flow opening (66), through which the medium that has flowed into the space (76) between the cylinder (44) and the piston (50) can slowly escape, preferably in such a way that the medium located in the space (76) brings about a damping of the closing of the valve disc (28).

2. Device according to Claim 1, **characterized in that** in the valve disc (28) there is formed at least one channel (70) for returning the medium emerging through the respective through-flow opening (66) during the closing of the valve disc (28) into the region of the flow channel (14) upstream of the valve disc (28), wherein a cross section of the or each channel (70) can be set by a respective throttling device (72), for adjusting the damping device (42).

3. Device according to one of the preceding claims, **characterized in that** the cylinder (44) has a cross-sectionally annular cylinder lateral wall (46), which on the side directed counter to the through-flow direction of the medium is closed by a circular cylinder end wall (48).

4. Device according to one of the preceding claims, **characterized in that** a single inflow opening (58) is arranged centrally in the cylinder end wall (48).

5. Device according to one of the preceding claims, **characterized in that** the piston (50) has a cross-sectionally annular piston lateral wall (52), which on the side directed counter to the through-flow direction of the medium is closed by a circular piston end wall (54).

6. Device according to one of the preceding claims, **characterized in that** a number of through-flow openings (66) are arranged concentrically in the piston end wall (54).

7. Device according to one of the preceding claims, **characterized in that** the piston lateral wall (52) lies in a media-tight manner against the valve disc (28).

8. Device according to one of the preceding claims, **characterized in that** the cross section of at least one channel (70) formed in the valve disc (28) can be changed by means of a throttling device (72), wherein the throttling device (72) is preferably adjustable on the side of the valve disc (28) that is facing away from the damping device (42).

9. Device according to one of the preceding claims, **characterized in that** the throttling device (28) is positioned centrally with respect to the flow channel (14).

## Revendications

1. Dispositif pour bloquer l'écoulement de milieux fluides dans des conduites tubulaires, des flexibles ou similaires, en particulier soupape anti-retour (10), pourvu d'un boîtier (12) qui comprend un canal d'écoulement (14) pour le milieu,
- la section transversale traversée du canal d'écoulement (14) pouvant être fermée par un disque de soupape (28) servant de moyen de blocage,
- le disque de soupape (28) étant pressé, à l'encontre du sens d'écoulement du milieu, contre un siège de soupape (26) par un ressort de soupape (32),
- un dispositif d'amortissement (42) étant associé au disque de soupape (28) en vue de la fermeture contrôlée du disque de soupape (28),
- le dispositif d'amortissement (42) agissant à l'encontre de la force de ressort du ressort de soupape (32), et amortissant le disque de soupape (28) lors de la fermeture du canal d'écoulement (14),
- le dispositif d'amortissement (42) comprenant un piston (50) guidé dans un cylindre (44), le mouvement du piston pouvant être amorti par le milieu situé dans le canal d'écoulement (14) lors de la fermeture du canal d'écoulement (14) au moyen du disque de soupape (28),
- le mouvement du disque de soupape (28) étant accouplé au mouvement du piston (50), de sorte que le piston (50), de manière synchrone avec le disque de soupape (28), puisse être animé d'un mouvement alternatif lors de l'ouverture et de la fermeture du disque de soupape dans le cylindre (44) disposé de manière fixe dans le boîtier (12),
- le cylindre (44) comprenant au moins une ouverture d'entrée (58) à travers laquelle le milieu peut entrer dans un espace (76) entre le cylindre (44) et le piston (50), en vue de l'amortissement du mouvement du piston (50) et du disque de soupape (28) lors de la fermeture,
**caractérisé par** les caractéristiques suivantes :
- la ou chaque ouverture d'entrée (58) peut être fermée par une ou plusieurs soupapes (60), de telle sorte que, lors de la fermeture du disque de soupape (28), aucun milieu ne puisse s'échapper à travers la ou chaque ouverture d'entrée (58) hors de l'espace (76) entre le cylindre (44) et le piston (50),
- la ou chaque soupape (60) est sollicitée par un ressort de soupape (64) pour fermer l'ouverture d'entrée (58) ou l'ouverture d'entrée respective, et est ouverte par le milieu entrant, la ou chaque soupape (60) étant montée dans un alésage traversant dans le piston (50),
- le piston (50) comprend au moins une ouverture de passage (66) à travers laquelle le milieu entré dans l'espace (76) entre le cylindre (44) et le piston (50) peut s'échapper de préférence lentement de telle sorte que le milieu situé dans l'espace (76) provoque un amortissement de la fermeture du disque de soupape (28).

2. Dispositif selon la revendication 1, **caractérisé en ce qu'**au moins un canal (70) est réalisé dans le disque de soupape (28) en vue du retour du milieu sortant à travers l'ouverture de passage (66) respective lors de la fermeture du disque de soupape (28) dans la région du canal d'écoulement (14) devant le disque de soupape (28), une section transversale du ou de chaque canal (70) pouvant être ajustée par un dispositif d'étranglement (72) respectif, en vue du réglage du dispositif d'amortissement (42).

3. Dispositif selon l'une quelconque des revendications précédentes, **caractérisé en ce que** le cylindre (44) comprend une paroi d'enveloppe de cylindre (46) de forme annulaire en section transversale, laquelle paroi d'enveloppe de cylindre est fermée par une paroi frontale de cylindre (48) circulaire du côté orienté à l'opposé du sens d'écoulement du milieu.

4. Dispositif selon l'une quelconque des revendications précédentes, **caractérisé en ce qu'**une ouverture d'entrée (58) unique est disposée de manière centrale dans la paroi frontale de cylindre (48).

5. Dispositif selon l'une quelconque des revendications précédentes, **caractérisé en ce que** le piston (50) comprend une paroi d'enveloppe de piston (52) de forme annulaire en section transversale, laquelle paroi d'enveloppe de piston est fermée par une paroi frontale de piston (54) circulaire du côté orienté à l'opposé du sens d'écoulement du milieu.

6. Dispositif selon l'une quelconque des revendications précédentes, **caractérisé en ce que** plusieurs ouvertures de passage (66) sont disposées de manière concentrique dans la paroi frontale de piston (54).

7. Dispositif selon l'une quelconque des revendications précédentes, **caractérisé en ce que** la paroi d'enveloppe de piston (52) s'applique de manière étanche aux milieux contre le disque de soupape (28).

8. Dispositif selon l'une quelconque des revendications précédentes, **caractérisé en ce que** la section transversale d'au moins un canal (70) réalisé dans le disque de soupape (28) peut être modifiée au moyen d'un dispositif d'étranglement (72), le dispositif d'étranglement (72) pouvant être réglé de préférence du côté du disque de soupape (28) opposé au dispositif d'amortissement (42).

9. Dispositif selon l'une quelconque des revendications précédentes, **caractérisé en ce que** le dispositif d'étranglement (28) est positionné de manière centrée par rapport au canal d'écoulement (14).
